# EUROPEAN PATENT APPLICATION

(11) **EP 4 074 771 A1**
(43) Date of publication of application: **19.10.2022**
(21) Application number: 20907918.5
(22) Date of filing: 15.12.2020
(51) Int. Cl.: C08K 3/04, C08K 5/13, C08K 5/37, C08K 5/098, C08K 5/14, C08L 23/08, H01B 1/24, H01B 9/02

(54) **SEMI-CONDUCTIVE LAYER COMPOSITION FOR HIGH-VOLTAGE CABLES**

(30) Priority: 23.12.2019 KR 20190173029
(71) Applicant: Hanwha Solutions Corporation, Jung-gu Seoul 04541 (KR)
(72) Inventor: LEE, In Jun, Daejeon 34128 (KR); LIM, Jae Yun, Daejeon 34128 (KR); KIM, Kisik, Daejeon 34128 (KR); PARK, Sang Kyu, Daejeon 34128 (KR); PARK, Jeong Hyun, Daejeon 34128 (KR); JANG, Jaekyu, Daejeon 34128 (KR)
(74) Representative: Behr, Wolfgang
(86) International application number: PCT/KR2020/018331
(87) International publication number: WO 2021/132971

(57) **Abstract**

Provided is a semi-conductive resin composition used in a high voltage power cable, and in particular, a semi-conductive resin composition having excellent processability and mechanical strength, and particularly, having an excellent volume resistance value even at high temperatures by including carbon black, an additive, a crosslinking agent, an oxidizing agent, and a lubricant in addition to a polyolefin-based base resin.

## Description

### [Technical Field]

The following disclosure relates to a semi-conductive resin composition used in a high voltage power cable, and in particular, to a semi-conductive resin composition having excellent processability and mechanical strength, and particularly, having an excellent volume resistance value even at a high temperature by including carbon black, an additive, a crosslinking agent, an oxidizing agent, and a lubricant in addition to a polyolefin-based base resin.

### [Background Art]

A semi-conductive material used in a cable is mainly used as a material for an intermediate layer that maintains the life of the cable for a long time by disposing the semi-conductive material between an insulator layer and a conductor of the cable to prevent a space charge, etc. from occurring.

As the temperature of the semi-conductive material increases, a volume resistance thereof increases. The volume resistance value increases because a conductive network of the semi-conductive material is destroyed by the temperature, thereby obstructing an electron path.

To solve the problem described above, the semi-conductive material may further include a conductive material such as graphene, carbon nanotube, and carbon black. However, if the conductive material is further included, a cost is greatly increased and a mechanical strength of the semi-conductive material is also lowered, and in particular, it is not easy to have uniform electrical conductivity due to protrusion phenomenon caused by aggregation of the conductive material, so it is required to solve this problem.

### [Disclosure]

### [Technical Problem]

An embodiment of the present invention is directed to providing a semi-conductive composition having excellent volume resistance even at a high temperature, no defects such as partial carbonization, and excellent tensile strength and elongation by using carbon black.

### [Technical Solution]

In one general aspect, there is provided a semi-conductive resin composition for a cable, containing a base resin, a phenol-based compound, a thioether-based compound, a metal stearate, carbon black having a bulk density of 220 to 380 kg/m³, and a crosslinking agent.

The base resin may include one or two or more selected from the group consisting of ethylene vinyl acetate, ethylene butyl acrylate, and ethylene ethyl acetate.

The base resin may have a weight average molecular weight of 1,000 g/mol to 1,000,000 g/mol.

The phenol-based compound may include one or more selected from the group consisting of 2,2'-thiodiethylene-bis-(3,5-di-tert-butyl-4-hydroxyphenyl)propionate, 4,4'-thio-bis-(2-tert-butyl-5-methylphenol), 1,2-dihydro-2,2,4-trimethylquinoline, diethyl((3,5-bis-(1,1-dimethylethyl)-4-hydroxyphenyl)methyl)phosphonate, 1,3,4-tris(4-tert-butyl-3-hydroxy-2,6-dimethylbenzene)-1,3,5-triazine-2,4,6-(1H,3H,5H)-trion, tetrakis[methylene-3-(3,5-di-tert-butyl-4-hydroxyphenyl)propionate]methane, octadecyl-3-(3,5-di-tert-butyl-4-hydroxyphenyl)propionate, tris(2,4-di-tert-butylphenyl)phosphate, and N,N'-bis-(3-(3',5'-di-tert-butyl-4'-hydroxyphenyl)propionyl)hydrazine.

The thioether-based compound may include one or more selected from the group consisting of dilauryl thiodipropionate, ditridecyl thiodipropionate, dimyristyl thiodipropionate, dioctadecyl disulfide, bis[2-methyl-4-(3-n-dodecylthiopropionyloxy)-5-tert-butylphenyl]sulfide, pentaerythritol-tetrakis-(3-laurylthiopropionate), 1,4-cyclohexanedimethanol, 3,3'-thiobispropanoic acid dimethyl ester polymer, and distearyl thiodipropionate.

The crosslinking agent may include one or more selected from the group consisting of di(tert-butylperoxyisopropyl) benzene, 1,1-(tert-butylperoxy)-3,3,5-trimethylcyclohexane, n-butyl-4,4-bis(butylperoxy)valerate, dicumylperoxide (DCP), perbutyl peroxide, 1,1-bis(tert-butylperoxy)-diisopropylbenzene, benzoyl peroxide, 2,5-dimethyl-2,5-di-tert-butylperoxyhexane, tert-butylperoxybenzoate, di-tert-butyl peroxide, and 2,5-dimethyl-2,5-di(tert-butylperoxyl)hexane.

The metal stearate may include zinc stearate, calcium stearate, aluminum stearate, and magnesium stearate.

The semi-conductive resin composition may have a volume resistance of 600 Ω·cm or less at 135°C.

The semi-conductive resin composition may further contain a processing aid.

In another general aspect, there is provided a cable having a semi-conductive layer prepared from the semi-conductive resin composition described above.

### [Advantageous Effects]

The present invention may provide a semi-conductive resin composition having excellent processability, excellent mechanical properties such as tensile strength and elongation, and particularly excellent volume resistance even at a high temperature by using a polyolefin-based resin such as ethylene vinyl acetate and ethylene butyl acetate as a base resin, combining an oxidizing agent having a specific structure, and combining carbon black having a specific property.

### [Best Mode]

Hereinafter, the present invention will be described in more detail through specific examples or Examples. The following specific examples and Examples are only a reference for describing the present invention in detail, and the present invention is not limited to, and may be implemented in various forms.

In addition, all technical terms and scientific terms have the same meanings as those commonly understood by a person skilled in the art to which the present invention pertains unless otherwise defined. The terms used herein are only for effectively describing certain embodiments, and are not intended to limit the present invention.

In addition, singular forms used in the detailed description and the claims are intended to include the plural forms unless otherwise indicated in context.

Unless explicitly described to the contrary, "including" any component will be understood to imply the inclusion of other components rather than the exclusion of other components.

In addition, the composition of the present invention refers to a weight ratio unless specifically limited.

The present invention is to provide a semi-conductive resin composition suitable for forming an inner semi-conductive layer of a medium voltage power cable, and will be described in detail below.

The present invention provides a semi-conductive resin composition for a cable, containing a polyolefin-based resin such as ethylene vinyl acetate and ethylene butyl acetate as a base resin, a mixed antioxidant of a phenol-based antioxidant and a thioether-based antioxidant, carbon black having a bulk density of 220 to 380 kg/m³, and a crosslinking agent.

In addition, the present invention provides a semi-conductive resin composition for a cable, containing a polyolefin-based resin such as ethylene vinyl acetate and ethylene butyl acetate as a base resin, a mixed antioxidant of a phenol-based antioxidant and a thioether-based antioxidant, carbon black having a bulk density of 220 to 380 kg/m³, and a crosslinking agent, and further containing any one or more components selected from a metal ester-based compound and a lubricant.

Specific examples of the present invention include a semi-conductive resin composition for a cable, containing 0.1 to 3 parts by weight of a phenol-based compound, 0.1 to 3 parts by weight of a thioether-based compound, 30 to 100 parts by weight of carbon black having a bulk density value of 220 to 380 kg/m³, and 0.1 to 5 parts by weight of a crosslinking agent based on 100 parts by weight of the base resin, but the present invention is not particularly limited thereto.

Specific examples of the present invention include, but are not limited to, a semi-conductive resin composition for a cable, containing 0.1 to 3 parts by weight of a phenol-based compound, 0.1 to 3 parts by weight of a thioether-based compound, 0.1 to 5 parts by weight of metal stearate, 30 to 100 parts by weight of carbon black having a bulk density value of 220 to 380 kg/m³, and 0.1 to 5 parts by weight of a crosslinking agent based on 100 parts by weight of the base resin.

The semi-conductive resin composition is used for a semi-conducting layer between a conductive layer and an insulating layer in a power cable, and may have an electric resistance of 10⁻⁹ to 10³ S/cm.

However, a problem arises in that a volume resistance value increases as the temperature of the semi-conductive resin composition increases.

The composition according to the present invention has an effect of suppressing partial discharge even at a high temperature, mitigating electrical stress, and also increasing tensile strength and elongation, when used in a high-voltage power cable due to its low volume resistance value even at a high temperature, by including carbon black having a specific structure.

Hereinafter, components of the composition according to the present invention will be described.

The base resin is a base resin obtained by mixing one or two or more from selected the group consisting of ethylene vinyl acetate, ethylene butyl acrylate, and ethylene ethyl acetate. Examples of the base resin may be preferably a weight average molecular weight of 1,000 g/mol to 1,000,000 g/mol, more preferably 5,000 g/mol to 800,000 g/mol, and still more preferably 10,000 g/mol to 600,000 g/mol, but are not limited thereto.

In addition, a content ratio of butyl acetate in the ethylene butyl acetate may be 10 to 30%, preferably 15 to 25%, and more preferably 16 to 20%.

The above-mentioned component is used alone or mixed with each other to prepare a base resin, and the resulting base resin is combined with a mixed antioxidant and carbon black to prepare a semi-conductive resin composition, which has excellent processability, flexibility, and durability. In addition, the base resin is suitable for use in materials such as a semi-conductive resin for the power cable that needs to have excellent adhesion to a conductor and insulator.

Hereinafter, the carbon black of the present invention will be described. The carbon black of the present invention may have a bulk density of 220 to 380 kg/m³, preferably 300 to 375 kg/m³, and more preferably 300 to 330 kg/m³. When the bulk density of the carbon black is within the above range, the effect of the present invention may be significantly increased. In the present invention, particles of the carbon black may also be nano-sized, and preferably 10 to 100 nm. When the bulk density of the carbon black in the same composition has the above-mentioned value, the composition has a significantly suppressed increase in volume resistance, and particularly, has very excellent volume resistance at a temperature of 90°C or higher. For example, when the bulk density of the present invention is within the above range, the volume resistance value at 90°C or more in Examples and Comparative Examples has a difference of 2 times to 20 times. This difference may result in an increase in partial resistance in the power cable due to a high resistance value, and accumulate electrical stress. The volume resistance may be 10 to 600 Ω·cm, preferably 10 to 100 Ω·cm, and more preferably 10 to 60 Ω·cm, but is not limited thereto.

In addition, the use of the carbon black may increase the conductivity of the semi-conductive composition and improve a surface smoothness of the semi-conductive layer because uniform dispersion to the surface of the semi-conductive layer can narrow a difference in shrinkage and expansion rates between adjacent regions on the surface of the semi-conductive layer. In the present invention, when the carbon black has a bulk density higher than the above range, the effect of the present invention cannot be achieved, from which an unexpected effect of the above range can be seen.

Thus, when the composition according to the present invention is used, it is possible to reduce the volume resistance for each temperature, and also increase the tensile strength and elongation without the need to increase the content of carbon black in the semi-conductive resin composition.

The tensile strength may be 150 to 400 kg/m², preferably 200 to 300 kg/m², and more preferably 220 to 240 kg/m², but is not limited thereto.

In addition, the elongation may be 150 to 400%, preferably 230 to 300%, and more preferably 245 to 280 %, but is not limited thereto.

Since a high mechanical value is required due to the characteristics of a high-voltage power cable, the use of the composition according to the present invention has a great advantage of having high mechanical properties and low volume resistance for each temperature.

In addition, the composition according to the present invention may be prepared by adding other carbon black or conductive material including the carbon black according to the present invention.

Hereinafter, the mixed antioxidant of the present invention will be described.

The use of the mixed antioxidant of the present invention is preferable because it can prevent significant partial carbonization compared to use alone or other antioxidants, even if not specifically shown as Examples.

In an aspect of the present invention, the phenol-based compound may include one or more selected from the group consisting of 2,2'-thiodiethylene-bis-(3,5-di-tert-butyl-4-hydroxyphenyl)propionate, 4,4'-thio-bis-(2-tert-butyl-5-methylphenol), 1,2-dihydro-2,2,4-trimethylquinoline, diethyl((3,5-bis-(1,1-dimethylethyl)-4-hydroxyphenyl)methyl)phosphonate, 1,3,4-tris(4-tert-butyl-3-hydroxy-2,6-dimethylbenzene)-1,3,5-triazine-2,4,6-(1H,3H,5H)-trion, tetrakis[methylene-3-(3,5-di-tert-butyl-4-hydroxyphenyl)propionate]methane, octadecyl-3-(3,5-di-tert-butyl-4-hydroxyphenyl)propionate, tris(2,4-di-tert-butylphenyl)phosphate, and N,N'-bis-(3-(3',5'-di-tert-butyl-4'-hydroxyphenyl)propionyl)hydrazine.

The thioether-based compound of the present invention may include one or more selected from the group consisting of dilauryl thiodipropionate, ditridecyl thiodipropionate, dimyristyl thiodipropionate, dioctadecyl disulfide, bis[2-methyl-4-(3-n-dodecylthiopropionyloxy)-5-tert-butylphenyl]sulfide, pentaerythritol-tetrakis-(3-laurylthiopropionate), 1,4-cyclohexanedimethanol, 3,3'-thiobispropanoic acid dimethyl ester polymer, and distearyl thiodipropionate.

A composition ratio of the mixed antioxidant may be, for example, 1:1, but is not limited thereto. In addition, the mixed antioxidant may be used within 0.1 to 6 parts by weight based on the total composition of the present invention, but is not necessarily limited thereto.

The use of the mixed antioxidant may increase the processability of the polymer by processing the semi-conductive resin composition, as well as prevent oxidation of the polymer.

The composition according to the present invention may contain the metal stearate, specifically, zinc stearate, calcium stearate, aluminum stearate, and magnesium stearate, preferably calcium stearate and zinc stearate, and more preferably zinc stearate, but the metal stearate is not limited thereto.

The content of the metal stearate may be 0.1 to 5 parts by weight, and preferably 1 to 3 parts by weight based on 100 parts by weight of the ethylene vinyl acetate.

It is possible to minimize slugging phenomenon of the polymer by further including the metal stearate. The semi-conductive layer of the present invention manufactured from the above-mentioned content of the metal stearate does not generate protrusions on the surface and may impart excellent surface properties. In addition, since the metal stearate improves fluidity of the electroconductive resin composition, it is possible to minimize variations in electroconductivity due to stretching when the electroconductive resin composition is molded.

In an aspect of the present invention, the crosslinking agent may include one or more selected from the group consisting of di(tert-butylperoxyisopropyl) benzene, 1,1-(tert-butylperoxy)-3,3,5-trimethylcyclohexane, n-butyl-4,4-bis(butylperoxy)valerate, dicumylperoxide, perbutyl peroxide, 1,1-bis(tert-butylperoxy)-diisopropylbenzene, benzoyl peroxide, 2,5-dimethyl-2,5-di-tert-butylperoxyhexane, tert-butylperoxybenzoate, di-tert-butyl peroxide, and 2,5-dimethyl-2,5-di(tert-butylperoxyl)hexane.

The crosslinkable polymer is crosslinked using a crosslinking agent. One suitable method is to impregnate a polymer powder or a polymer pellet with the crosslinking agent. The mixture is then heated to a temperature higher than a decomposition temperature of the crosslinking agent. Suitable crosslinking agent that can be used may include, but is not limited to, for example, di(tert-butylperoxyisopropyl) benzene, 1,1-(tert-butylperoxy)-3,3,5-trimethylcyclohexane, n-butyl-4,4-bis(butylperoxy)valerate, dicumylperoxide (DCP), perbutyl peroxide, 1,1-bis(tert-butylperoxy)-diisopropylbenzene, benzoyl peroxide, 2,5-dimethyl-2,5-di-tert-butylperoxyhexane, tert-butylperoxybenzoate, di-tert-butyl peroxide, and 2,5-dimethyl-2,5-di(tert-butylperoxyl)hexane, preferably di(tert-butylperoxyisopropyl) benzene, perbutyl peroxide, 1,1-(tert-butylperoxy)-3,3,5-trimethylcyclohexane, benzoyl peroxide, and dicumyl peroxide, and more preferably dicumyl peroxide and perbutyl peroxide.

0.1 to 5 parts by weight of the crosslinking agent may be contained in 100 parts by weight of the ethylene vinyl acetate. If the crosslinking agent is contained in an amount of less than 0.1 parts by weight, crosslinking is not sufficiently performed and final physical properties may be deteriorated. If the crosslinking agent is contained in an amount of 5 parts by weight or more, moldability may be deteriorated.

As the crosslinking agent is contained within the above range, crosslinking properties of the base resin are improved and dispersibility of the additive is improved, such that the lifespan may be increased when a power line is applied for the semi-conductive layer.

The semi-conductive resin composition may further contain a processing aid. The processing aid may include, but is not limited to, montan wax, fatty acid ester, triglyceride or partial ester thereof, glycerin ester, polyethylene wax, paraffin wax, metal soap-based lubricant, amide-based lubricant, and the like, preferably fatty acid esters, triglycerides or partial esters thereof, and polyethylene wax.

As the processing acid is further contained, the composition may improve releasability with the conductor and lower extrusion load.

The semi-conductive resin composition is easy to use as a semi-conductive layer of the cable, and in particular, may have a low volume resistance value even at a high temperature. Thus, the semi-conductive resin composition is suitable for use in a semi-conductive layer of a high-voltage cable.

When high-voltage power flows from the power cable to the conductor, a partial discharge flows into the semi-conductive layer, which can cause the temperature to rise due to the volume resistance generated in the semi-conductive layer.

As the temperature of the semi-conductive layer rises, the volume resistance values further increase. Thus, the above-mentioned effect results in a shorter life of the power cable. Since the semi-conductive resin composition for a cable according to the present invention has a low volume resistance even at a high temperature, an increase in volume resistance due to an increase in temperature is suppressed, such that the semi-conductive resin composition is effective for use in the power cable.

Hereinafter, the present invention will be described in more detail on the basis of Examples and Comparative Examples. However, the following Examples and Comparative Examples are an example for describing the present invention in more detail, and the present invention is not limited by the following Examples and Comparative Examples.

### [Example 1]

A semi-conductive resin composition was prepared by kneading at 150°C for 30 minutes in a Banbury mixer. Based on 100 parts by weight of an ethylene ethyl acrylate copolymer having a butyl acrylate content of 17 mol% and a melt index (ASTM 1238, 190°C, 2.16 kgf) of 7.0 g/10min, 0.1 parts by weight of 1,2-dihydro-2,2,4-trimethylquinoline (Naugard SuperQ, Miwon commercial Co., Ltd.), 0.15 parts by weight of dimyristyl thiodipropionate (Mianto-S, Miwon commercial Co., Ltd.), 53.83 parts by weight of carbon black (420B, HIBLACK) having a bulk density of 325 Kg/m³, and 1.35 parts by weight of zinc stearate were kneaded at 100°C for 30 minutes. After the kneaded mixture was passed through a roll mill and a crusher to produce a chip-type, a crosslinking agent (di(tert-butylperoxyisopropyl) benzene, AkzoNobel) was additionally added in a Brabender mixer, the mixture was impregnated at 75°C for 10 minutes at 40 rpm and aged for 8 hours in an oven at 70 to prepare a semi-conductive compound. The tensile strength and elongation (ATSM D 638, 250 mm/min) of the prepared compound composition were measured, and the results are shown in Table 1, and the volume resistance (ASTM D991) of the prepared compound composition was measured, and the results are shown in Table 2.

### [Example 2]

Example 2 was carried out in the same manner as that in Example 1, except that carbon black (XC200, VULCAN) having a bulk density of 375 Kg/m³ was used as the carbon black.

### [Example 3]

Example 3 was carried out in the same manner as that in Example 1, except that carbon black (XC500, VULCAN) having a bulk density of 306 Kg/m³ was used as the carbon black.

### [Comparative Example 1]

Comparative Example 1 was carried out in the same manner as that in Example 1, except that carbon black (150B, HIBLACK) having a bulk density of 395 Kg/m³ was used as the carbon black.

**[Table 1]**

| | Elongation (%) | Tensile strength (kg/m²) |
|---|---|---|
| Example 1 | 247 | 234.3 |
| Example 2 | 274 | 220.8 |
| Example 3 | 260 | 223.1 |
| Comp. Example 1 | 259 | 216.3 |

**[Table 2]**

| | Temperature | Example 1 | Example 2 | Example 3 | Comp. Example 1 |
|---|---|---|---|---|---|
| Volume resistance (Ω·cm) | 30°C | 20 | 69 | 25 | 69 |
| | 60°C | 24 | 147 | 24 | 156 |
| | 90°C | 66 | 580 | 59 | 1054 |
| | 110°C | 65 | 559 | 56 | 1126 |
| | 135°C | 59 | 540 | 49 | 1064 |

It could be confirmed that the elongation and tensile strength values were changed depending on the type of carbon black described in Table 1 above.

It was confirmed that all Examples had higher tensile strength than Comparative Example, and from the above results, the semi-conductive resin composition had excellent mechanical strength.

In addition, it was confirmed that in the case of the volume resistance for each temperature in Table 2, Examples had a lower volume resistance over an entire temperature range than Comparative example.

From this, it was confirmed that a difference in the bulk density of the carbon black results in a remarkable effect having excellent resistance values not only for mechanical properties such as the elongation and tensile strength, but also for the volume resistance for each temperature.

Hereinabove, although the present invention has been described by specific matters, the limited embodiments, they have been provided only for assisting in a more general understanding of the present invention. Therefore, the present invention is not limited to the exemplary embodiments. Various modifications and changes may be made by those skilled in the art to which the present invention pertains from this description.

Therefore, the spirit of the present invention should not be limited to the above-mentioned embodiments, but the claims and all of the modifications equal or equivalent to the claims are intended to fall within the scope and spirit of the present invention.

## Claims

1. A semi-conductive resin composition for a cable, comprising: a base resin, a phenol-based compound, a thioether-based compound, a metal stearate, carbon black having a bulk density of 220 to 380 kg/m3, and a crosslinking agent.

2. The semi-conductive resin composition of claim 1, wherein the base resin is one or two or more selected from the group consisting of ethylene vinyl acetate, ethylene butyl acrylate, and ethylene ethyl acetate.

3. The semi-conductive resin composition of claim 2, wherein the base resin has a weight average molecular weight of 1,000 g/mol to 1,000,000 g/mol.

4. The semi-conductive resin composition of claim 1, wherein the phenol-based compound includes one or more selected from the group consisting of 2,2'-thiodiethylene-bis-(3,5-di-tert-butyl-4-hydroxyphenyl)propionate, 4,4'-thio-bis-(2-tert-butyl-5-methylphenol), 1,2-dihydro-2,2,4-trimethylquinoline, diethyl((3,5-bis-(1,1-dimethylethyl)-4-hydroxyphenyl)methyl)phosphonate, 1,3,4-tris(4-tert-butyl-3-hydroxy-2,6-dimethylbenzene)-1,3,5-triazine-2,4,6-(1H,3H,5H)-trion, tetrakis[methylene-3-(3,5-di-tert-butyl-4-hydroxyphenyl)propionate]methane, octadecyl-3-(3,5-di-tert-butyl-4-hydroxyphenyl)propionate, tris(2,4-di-tert-butylphenyl)phosphate, and N,N'-bis-(3-(3',5'-di-tert-butyl-4'-hydroxyphenyl)propionyl)hydrazine.

5. The semi-conductive resin composition of claim 1, wherein the thioether-based compound includes one or more selected from the group consisting of dilauryl thiodipropionate, ditridecyl thiodipropionate, dimyristyl thiodipropionate, dioctadecyl disulfide, bis[2-methyl-4-(3-n-dodecylthiopropionyloxy)-5-tert-butylphenyl]sulfide, pentaerythritol-tetrakis-(3-laurylthiopropionate), 1,4-cyclohexanedimethanol, 3,3'-thiobispropanoic acid dimethyl ester polymer, and distearyl thiodipropionate.

6. The semi-conductive resin composition of claim 1, wherein the crosslinking agent includes one or more selected from the group consisting of di(tert-butylperoxyisopropyl) benzene, 1,1-(tert-butylperoxy)-3,3,5-trimethylcyclohexane, n-butyl-4,4-bis(butylperoxy)valerate, dicumylperoxide (DCP), perbutyl peroxide, 1,1-bis(tert-butylperoxy)-diisopropylbenzene, benzoyl peroxide, 2,5-dimethyl-2,5-di-tert-butylperoxyhexane, tert-butylperoxybenzoate, di-tert-butyl peroxide, and 2,5-dimethyl-2,5-di(tert-butylperoxyl)hexane.

7. The semi-conductive resin composition of claim 1, wherein the metal stearate includes zinc stearate, calcium stearate, aluminum stearate, and magnesium stearate.

8. The semi-conductive resin composition of claim 1, wherein the semi-conductive resin composition has a volume resistance of 600 Ω·cm or less at 135°C.

9. The semi-conductive resin composition of claim 1, further comprising a processing aid.

10. A cable having a semi-conductive layer prepared from the semi-conductive resin composition for a cable of any one of claims 1 to 9.
